# FASCICULE DE BREVET EUROPEEN

(11) **EP 1 700 769 B1**
(45) Date de publication et mention de la délivrance du brevet: **06.01.2010**
(21) Numéro de dépôt: 06110464.2
(22) Date de dépôt: 27.02.2006
(51) Int. Cl.: B62B 7/14, B62B 9/00

(54) **Poussette pliante pour enfant, à pédale d'aide au dépliage.**
Zusammenklappbarer Kinderwagen mit Entfaltauslösepedal
Collapsible carriage for children with a release pedal

(30) Priorité: 08.03.2005 FR 0502322; 12.07.2005 FR 0507486
(43) Date de publication de la demande: 13.09.2006
(73) Titulaire: Dorel France SA, 49309 Cholet Cedex (FR)
(72) Inventeur: Ageneau, Laurent, 44210, Pornic (FR)
(74) Mandataire: Bioret, Ludovic

(56) Documents cités:
- EP-A- 0 734 934
- EP-A- 1 232 927

## Description

Le domaine de l'invention est celui de la puériculture, et plus précisément des voitures d'enfant, ou poussettes.

Plus précisément encore, l'invention concerne les poussettes à pliage en trois dimensions, équipées d'un mécanisme permettant, en position pliée, de rapprocher les roues les unes des autres.

On connaît déjà de nombreuses poussettes de ce type, dites à pliage 3D, ou également à pliage fagot. Ces poussettes présentent en effet l'avantage de présenter une bonne compacité, en position pliée.

Souvent, ces poussettes sont équipées d'un mécanisme à croisillons, reliant les deux brancards arrière. Un tel mécanisme est relativement simple dans son principe, et efficace. Il maintient le châssis de la poussette de façon suffisamment rigide en position dépliée, et permet le guidage des brancards arrière de la position pliée à la position dépliée, et vice-versa.

Cependant, dans certains cas, la présence de ces croisillons peut rendre assez difficile le dépliage du châssis. En effet, le mécanisme à croisillons reste formé d'éléments rigides, qui doivent assurer la bonne tenue du châssis en position dépliée. En conséquence, les utilisateurs sont souvent conduits à accompagner le dépliage avec le pied, en agissant sur ces croisillons.

Pour faciliter cette opération, on pourrait prévoir une pédale, sur laquelle l'utilisateur viendrait appuyer. Cela serait plus ergonomique, et plus efficace.

Le document EP 0 734 934 décrit une telle poussette à pliage 30 munie d'une pédale en accord avec les termes proposés dans le préambule de la revendication 1.

Pourtant, la mise en place efficace d'une telle pédale n'est pas aisée, du fait que ces croisillons sont par définition articulés et se déplacent selon des angles qui varient. Solidariser une telle pédale à plusieurs croisillons n'est donc pas possible, puisque cela s'opposerait à leur déplacement. Solidariser la pédale à une seule articulation de deux croisillons ne serait pas efficace, la pédale risquant alors de se déplacer en rotation, alors qu'elle doit bien sûr rester verticale.

L'invention a notamment pour objectif de pallier ces inconvénients.

Plus précisément, un objectif de l'invention est de fournir une poussette équipée de croisillons de pliage, mettant en oeuvre de façon simple et efficace une pédale d'aide au dépliage.

En particulier, l'objectif de l'invention est de fournir une telle technique, sur laquelle la pédale reste en position verticale (lorsque les roues sont posées au sol), sans s'opposer au pliage et au dépliage.

L'invention a également pour objectif de fournir une telle poussette, qui soit simple et peu coûteuse à mettre en oeuvre, au moins en ce qui concerne les aspects liés à la pédale.

Selon un autre aspect de l'invention, un objectif est de fournir une technique permettant de réduire l'encombrement de la poussette en position pliée, même en présence d'un hamac et d'un dispositif de réception d'objets, placé sous le hamac.

Ces objectifs, ainsi que d'autres qui apparaîtront par la suite, sont atteints à l'aide d'une poussette pliante comprenant un châssis pliant présentant deux montants arrière, à l'extrémité inférieure desquels est monté une roue ou un bloc de roues, et un jeu de quatre croisillons :
- deux premiers croisillons, défmissant un compas supérieur, étant reliés par leurs extrémités supérieures pour former une première articulation centrale et reliés respectivement à chacun desdits montants arrière par leurs extrémités inférieures, pour former une articulation d'extrémité, et
- deux seconds croisillons, défmissant un compas inférieur, étant reliés par leurs extrémités inférieures pour former une seconde articulation centrale et reliés respectivement à chacun desdits montants arrière par leurs extrémités supérieures, pour former une articulation d'extrémité,
lesdits premier et second compas étant solidarisés l'un à l'autre par deux articulations intermédiaires, solidarisant chacune un premier croisillon et un second croisillon.

Selon l'invention, la poussette comprend un compas complémentaire, dont:
- l'articulation centrale est solidaire d'une partie de liaison d'une pédale comprenant une partie d'appui et une partie de liaison au châssis, et destinée à faciliter le dépliage de ladite poussette, en appuyant avec un pied sur ladite pédale, et
- chacune des extrémités est solidaires d'un desdits premiers croisillons. Ainsi, ce compas complémentaire permet de maintenir, de façon simple et efficace, la pédale dans une position verticale.

De façon avantageuse, la distance entre une desdites articulations d'extrémité et une desdites articulations intermédiaires est sensiblement le double de la distance entre une desdites articulations intermédiaires et une desdites articulations centrales, de façon à libérer une zone inférieure, au voisinage des roues, dans une position pliée.

Cette approche originale (l'articulation est généralement en position centrale) permet de déporter, en position pliée, l'ensemble des croisillons vers le haut, et donc de libérer l'espace inférieur, notamment pour le hamac et le support placé éventuellement sous celui-ci.

Bien entendu, le terme « sensiblement double » doit être pris dans un sens large, et non littéral. Il signifie essentiellement que la position des articulations intermédiaires sont décalées par rapport au milieu des croisillons.

Selon un mode de réalisation avantageux, lesdits croisillons sont sensiblement cylindriques, au voisinage desdites articulations d'extrémité, et sensiblement aplatis, au voisinage desdites articulations intermédiaires et/ou centrales.

D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :
- la figure 1 présente un châssis, vu de côté, d'un exemple de poussette mettant en oeuvre l'invention ;
- la figure 2 présente le châssis de la poussette de la figure 1, en position pliée ;
- la figure 3 illustre le mécanisme à croisillons équipant la poussette des figures 1 et 2, sans la pédale de l'invention ;
- la figure 4 présente la pédale selon l'invention, et son compas de maintien en position verticale selon l'invention, en position dépliée ;

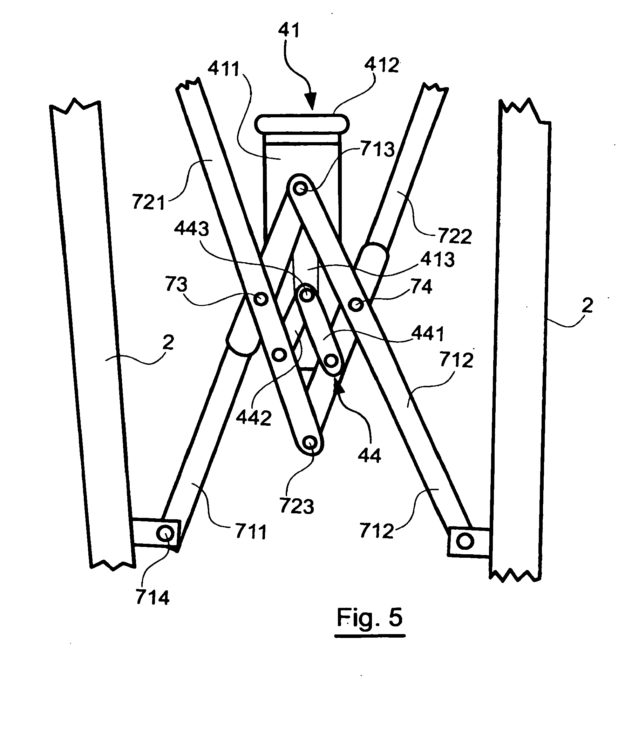

- la figure 5 présente la pédale de la figure 4, en position pliée ;
- la figure 6 illustre schématiquement la cinématique de la poussette, selon un autre mode de mise en oeuvre.

Comme précisé plus haut, l'invention concerne donc la mise en oeuvre d'une pédale d'aide au dépliage pour une poussette à pliage en trois dimensions.

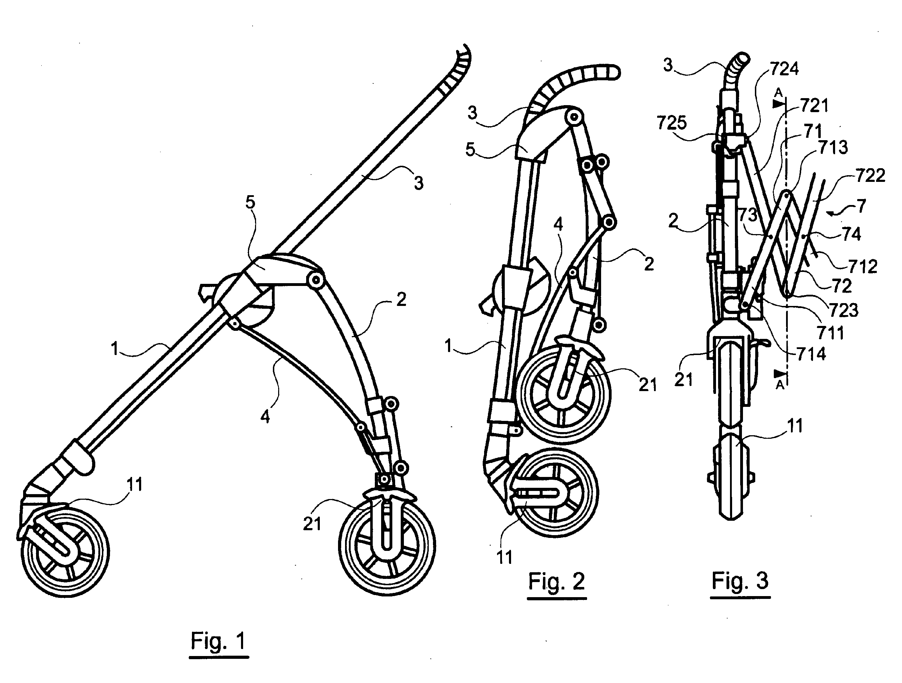

Les figures 1 et 2 présentent un exemple de châssis pliant d'une telle poussette.

Le châssis d'un exemple de poussette selon l'invention est représenté en position déployée sur la figure 1. Ce châssis comporte deux brancards, ou piétements, avant 1 et deux brancards, ou piétements, arrière 2.

Des roues avant 11 (ou des blocs de roue) sont montées à l'extrémité inférieure des brancards avant 1 et des roues arrière 21 (ou des blocs de roue) sont montées à l'extrémité inférieure des brancards arrière 2. L'extrémité supérieure de chaque brancard avant 1 est liée à l'extrémité supérieure d'un brancard arrière 2 par une pièce formant charnière 5. Cette pièce charnière 5 permet une rotation du brancard arrière 2 par rapport au brancard avant 1.

Le châssis comporte également deux poussoirs 3 s'étendant respectivement, en position dépliée, dans le prolongement des deux brancards avant 1, de façon qu'ils coulissent à l'intérieur de ces derniers, lors du pliage. La partie supérieure de ces poussoirs 3 est munie de poignées. Ces poignées peuvent être reliées ou non, selon le cas.

Une première biellette 4 relie l'extrémité inférieure de chaque poussoir 3 avec le brancard arrière 2 qui se trouve du même côté. Comme l'illustre la figure 3, qui montre une vue partielle de l'arrière de la poussette en position déployée, un ensemble de croisillons 7 relie les deux brancards arrière 2.

Comme cela apparaît sur la figure 3, les brancards arrière sont reliés entre eux par un jeu de croisillons 7 (sur cette figure 3, on a représenté un seul côté de la poussette). L'autre est bien sûr symétrique, par rapport à l'axe AA. Sur cette figure, on n'a volontairement pas représenté la pédale selon l'invention, de façon à mieux laisser apparent le mécanisme.

Le mécanisme à croisillons 7 est formé de deux compas interconnectés. Un compas 71, dit compas supérieur, est formé de deux croisillons 711 et 712, articulés en leur partie supérieure par une articulation 713. A leur extrémité inférieure, ces croisillons sont solidarisés au piètement arrière par une articulation 714.

Avantageusement, cette articulation 714 présente au moins un degré de liberté, pour suivre efficacement le profil galbé du piètement arrière 2, qui va entraîner un basculement de l'ensemble des croisillons, lors du pliage ou du dépliage. Selon un mode de réalisation simplifié, l'articulation est formée par une vis (ou le cas échéant un rivet), traversant le croisillon au travers de deux lumières, dont le diamètre est sensiblement supérieur à celui de la vis de façon à offrir le jeu suffisant par rapport au galbe du piètement arrière.

Le mécanisme comprend également un second compas, dit compas inférieur 72, formé de deux croisillons 721 et 722, reliés entre eux par une articulation 723 à l'une de leurs extrémités, et solidaires à leur extrémité supérieure 724 d'une bague 725 coulissant le long du piètement arrière 2.

De la même façon que précisé ci-dessus, la liaison peut être optimisée pour prendre en compte le galbe du piètement arrière.

Comme cela apparaît sur la figure 3, les deux compas sont liés l'un à l'autre par deux articulations 73 et 74. Contrairement aux techniques usuelles, ces articulations ne sont pas placées au milieu des croisillons, mais sont décalées, de façon que la distance entre les articulations intermédiaires 73 et 74 et les articulations centrales 713 et 723 soient sensiblement la moitié de la distance entre l'autre partie du croisillon, respectivement entre les articulations 73 et 714 d'une part, et 73 et 724 d'autre part.

Comme précisé plus haut, l'ordre de grandeur donné pour ces distances est indicatif, l'aspect important étant que les articulations intermédiaires ne sont pas au milieu des croisillons, ou proches de ce milieu. Cela permet de libérer de l'espace dans la partie inférieure de la poussette, en position pliée.

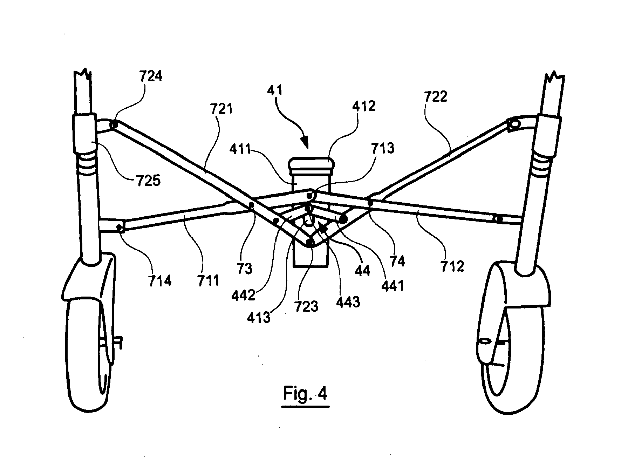

Comme illustré sur les figures 4 (position dépliée) et 5 (position pliée), selon l'invention, on a ajouté une pédale 41, qui présente une portion 411 sensiblement verticale de solidarisation au mécanisme à croisillons, et une portion sensiblement horizontale 412 d'appui, selon laquelle un utilisateur pourra placer le pied pour faciliter le dépliage de la poussette.

La portion de solidarisation est fixée d'une part à l'articulation 713, par exemple par une vis 42. On comprend cependant que, si cette vis 42 était la seule liaison, la pédale 41 aurait tendance à basculer à droite ou à gauche. Il n'est bien sûr pas possible de rajouter une fixation à l'autre articulation 723, puisque la distance entre les articulations 713 et 723 varient, et que celle-ci est très importante en position pliée.

Selon l'invention, on introduit donc un second point de fixation 43, par l'intermédiaire d'un compas complémentaire 44, comprenant deux biellettes 441 et 442.

L'articulation 443 de ce compas est placée sous l'articulation 713, ce qui fournit deux points de fixation alignés verticalement pour la portion de solidarisation 411 de la pédale. Les autres extrémités des biellettes 441 et 442 sont solidarisées aux croisillons 721 et 722 du compas inférieur.

L'articulation 443 est mobile, par rapport à la pédale, et guidée verticalement par une lumière ou une encoche verticale 413, pour prendre en compte la variation de distance entre les articulations 713 et 443, lors du pliage et du dépliage.

Ainsi, de façon simple et efficace, la pédale 41 reste en permanence maintenue verticalement.

De façon avantageuse, les croisillons sont aplatis, au moins en leur partie centrale, de façon à réduire l'encombrement, et faciliter le déplacement de l'ensemble des pièces.

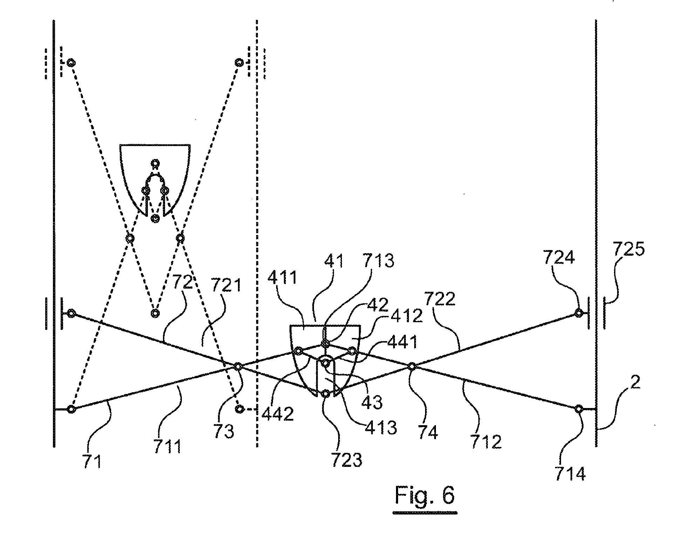

Le mode de réalisation décrit précédemment prévoit que le compas supplémentaire est solidaire du compas inférieur. Bien sûr, il est possible qu'il soit, alternativement, solidaire du compas supérieur, comme illustré par la figure 6.

Sur cette figure 6, on a représenté schématiquement la partie arrière de la poussette (croisillons et pédale) en trait plein pour la position dépliée et en pointillés pour la position repliée. Par simplification, on a conservé les mêmes références numériques que dans les figures précédentes.

On constate donc que la pédale 41 est maintenue droite (c'est-à-dire que la zone d'appui reste horizontale) entre les deux positions. Cela est assuré par les deux points de maintien 43 et 42. Le point de maintien 42 est fixe par rapport à la pédale, tout en permettant bien sûr l'ouverture et la fermeture du compas supérieur 71 dont il forme l'articulation centrale.

Le point de maintien 43 est l'articulation centrale du compas supplémentaire 44, dont les extrémités sont donc solidaires des croisillons 711 et 712 du compas supérieur 71. Cette articulation centrale 43 est mobile par rapport à la pédale 41, et peut coulisser, verticalement, dans l'encoche, ou une lumière oblongue verticale 413.

## Revendications

1. Poussette pliante comprenant un châssis pliant présentant deux montants arrière (2), à l'extrémité inférieure desquelles est monté une roue ou un bloc (21) de roues, et un jeu de quatre croisillons (711, 712, 721, 722)
deux premiers croisillons (711, 712), définissant un compas supérieur (7I), étant reliés par leurs extrémités supérieures pour former une première articulation centrale (713) et reliés respectivement à chacun desdits montants arrière (2) par leurs extrémités inférieures, pour former une articulation d'extrémité (714), et deux seconds croisillons (721, 722), définissant un compas inférieur (72), étant reliés par leurs extrémités inférieures pour former une seconde articulation centrale (723) et reliés respectivement à chacun desdits montants arrière (2) par leurs extrémités supérieures, pour former une articulation d'extrémité (724), coulissante le long dudit montant arrière (2),
lesdits premier (71) et second (72) compas étant solidarisés l'un à l'autre par deux articulations intermédiaires (73, 74), solidarisant chacune un premier croisillon (711,712) et un second croisillon (721, 722),
**caractérisée en ce qu'**elle comprend un compas complémentaire (44), dont :
- l'articulation centrale (443) est solidaire d'une partie de liaison d'une pédale (41) comprenant une partie d'appui (412) et une partie de liaison au châssis (411), et destinée à faciliter le dépliage de ladite poussette, en appuyant avec un pied sur ladite pédale (41), et
- chacune des extrémités est solidaires d'un desdits premiers croisillons (711, 712) ou d'un desdits seconds croisillons (721, 722).

2. Poussette pliante selon la revendication 1, **caractérisée en ce que** la distance entre une desdites articulations d'extrémité (714, 724) et une desdites articulations intermédiaires (73, 74) est sensiblement le double de la distance entre une desdites articulations intermédiaires (73, 74) et une desdites articulations centrales (713, 723), de façon à libérer une zone inférieure, au voisinage des roues (21), dans une position pliée.

3. Poussette pliante selon l'une quelconque des revendications 1 et 2,
**caractérisée en ce que** lesdits croisillons (7111, 712, 721, 722) sont sensiblement cylindriques, au voisinage desdites articulations d'extrémité (714, 724), et sensiblement aplatis, au voisinage desdites articulations intermédiaires (73, 74) et/ou centrales (713,723).

4. Poussette pliante selon l'une quelconque des revendications 1 à 3,
**caractérisée en ce que** ladite pédale (41) présente une encoche verticale (413) permettant le déglacement de ladite articulation centrale (443) du compas complémentaire (44).

5. Poussette pliante selon l'une quelconque des revendications 1 à 4,
**caractérisée en ce que** ladite partie de liaison (411) de la pédale (41) est maintenue sensiblement verticale à l'aide d'une partie d'une liaison fixe correspondant à l'articulation centrale (713, 723) dudit compas supérieur (71) ou dudit compas inférieur (72) et d'autre part par une liaison mobile correspondant à l'articulation centrale (443) dudit compas supplémentaire (44), guidée en coulissement par rapport à ladite partie de liaison (411).

## Claims

1. Folding pushchair comprising a folding frame which has two rear uprights (2), at the lower end of which is fitted a wheel or set of wheels (21), and a set of four cross-pieces (711,712,721,722), two first cross-pieces (711, 712) which define an upper calliper (71) being connected by their upper ends in order to form a first central articulation (713) and being connected respectively to each of the said rear uprights (2) by their lower ends, in order to form an end articulation (714), and two second cross-pieces (721, 722) which define a lower calliper (72) being connected by their lower ends in order to form a second central articulation (723) and being connected respectively to each of the said rear uprights (2) by their upper ends, in order to form an end articulation (724) which slides along the said rear upright (2), the said first (71) and second (72) callipers being rendered integral with one another by two intermediate articulations (73, 74) which each render integral a first cross-piece (711, 712) and a second cross-piece (721, 722), **characterised in that** it comprises an additional calliper (44), of which:
- the central articulation (443) is integral with a connection part of a pedal (41) comprising a support part (412) and a part (411) for connection to the frame, and is designed to facilitate the unfolding of the said pushchair, when a foot is pressed on the said pedal (41); and
- each of the ends is integral with one of the said first cross-pieces (711, 712) or with one of the said second cross-pieces (721, 722).

2. Folding pushchair according to claim 1, **characterised in that** the distance between one of the said end articulations (714, 724) and one of the said intermediate articulations (73, 74) is substantially twice the distance between one of the said intermediate articulations (73, 74) and one of the said central articulations (713, 723), such as to release a lower area, in the vicinity of the wheels (21), in a folded position.

3. Folding pushchair according to either of claims 1 and 2, **characterised in that** the said cross-pieces (711, 712, 721, 722) are substantially cylindrical in the vicinity of the said end articulations (714, 724), and are substantially flattened in the vicinity of the said intermediate articulations (73, 74) and/or central articulations (713, 723).

4. Folding pushchair according to any one of claims 1 to 3, **characterised in that** the said pedal (41) has a vertical notch (413) which permits displacement of the said central articulation (443) of the additional calliper (44).

5. Folding pushchair according to any one of claims 1 to 4, **characterised in that** the said connection part (411) of the pedal (41) is maintained substantially vertical by means of a part of a fixed connection which corresponds to the central articulation (713, 723) of the said upper calliper (71) or of the said lower calliper (72), and also by a mobile connection which corresponds to the central articulation (443) of the said additional calliper (44), guided by sliding relative to the said connection part (411).

## Patentansprüche

1. Zusammenklappbarer Kinderwagen, der einen zusammenfaltbaren Rahmen umfasst, welcher zwei hintere Streben (2) aufweist, an deren unterem Ende jeweils ein Rad oder ein Radblock (21) und ein Satz von vier Scherenstreben (711, 712, 721, 722) angebracht sind,
wobei zwei erste Scherenstreben (711, 712) ein oberes V-förmiges Gelenk (71) bilden,
wobei sie jeweils an ihrem oberen Ende so verbunden sind, dass sie ein erstes zentrales Gelenk (713) bilden und wobei sie jeweils mit jeder der besagten hinteren Streben (2) über ihre unteren Enden verbunden sind, um ein Endgelenk (714) zu bilden und wobei zwei zweite Scherenstreben (721, 722) ein unteres V-förmiges Gelenk (72) bilden, wobei sie jeweils an ihrem unterem Ende so verbunden sind, dass sie ein zweites zentrales Gelenk (723) bilden und wobei sie jeweils mit jeder der besagten hinteren Streben (2) über ihre oberen Enden verbunden sind, um ein Endgelenk (724) zu bilden, das an besagten hinteren Streben (2) entlang gleiten kann,
wobei das besagte erste V-förmige Gelenk (71) und das besagte zweite V-förmige Gelenk (72) miteinander über zwei Zwischengelenke (73, 74) verbunden sind, die jeweils eine erste Scherenstrebe (711, 712) und eine zweite Scherenstrebe (721, 722) miteinander verbinden,
**dadurch gekennzeichnet, dass** der Kinderwagen ein zusätzliches Gelenk (44) aufweist, von dem
- das zentrale Gelenk (443) mit einem Verbindungsteil eines Pedals (41) zusammenhängt, das einen Stützteil (412) und einen Verbindungsteil zum Rahmen (411) umfasst, welches das Entfalten des besagten Kinderwagens erleichtern soll, indem das besagte Pedal (41) mit dem Fuß gedrückt wird und,
- jedes Ende mit einem der besagten ersten Scherenstreben (711, 712) oder mit einem besagten zweiten Scherenstreben (721, 722) verbunden ist.

2. Zusammenklappbarer Kinderwagen nach Anspruch 1, **dadurch gekennzeichnet, dass** der Abstand zwischen einem der besagten Endgelenke (714, 724) und einem der besagten Zwischengelenke (73, 74) in etwa das Doppelte des Abstandes zwischen einem der besagten Zwischengelenke (73, 74) und einem der besagten zentralen Gelenke (713, 723) beträgt, um einen unteren Bereich in der Nähe der Räder (21) in einer zusammengeklappten Position freizuhalten.

3. Zusammenklappbarer Kinderwagen nach einem der Ansprüche 1 oder 2, **dadurch gekennzeichnet, dass** die besagten Scherenstreben (711, 712, 721, 722) in der Nähe der besagten Endgelenke (714, 724) in etwa zylindrisch und in der Nähe der besagten Zwischengelenke (73, 74) und/oder der besagten zentralen Gelenke (713, 723) in etwa abgeflacht sind.

4. Zusammenklappbarer Kinderwagen nach einem der Ansprüche 1 bis 3, **dadurch gekennzeichnet, dass** das besagte Pedal (41) eine senkrechte Nut (413) aufweist, welche das Verschieben des besagten zentralen Gelenks (443) des zusätzlichen Gelenks (44) ermöglicht.

5. Zusammenklappbarer Kinderwagen nach einem der Ansprüche 1 bis 4, **dadurch gekennzeichnet, dass** das besagte Verbindungsteil (411) des Pedals (41) in etwa senkrecht gehalten wird, und zwar mit Hilfe eines Teiles einer festen Verbindung, welche dem zentralen Gelenk (713, 723) des besagten oberen V-förmigen Gelenks (71) oder des besagten unteren V-förmigen Gelenks (72) entspricht, und andererseits durch eine bewegliche Verbindung, die dem zentralen Gelenk (443) des besagten Zusatzgelenks (44) entspricht, welche in einer gleitenden Bewegung gegenüber dem besagten Verbindungsteil (411) geführt wird.
